# EUROPÄISCHE PATENTSCHRIFT

(11) **EP 1 186 481 B1**
(45) Veröffentlichungstag und Bekanntmachung des Hinweises auf die Patenterteilung: **13.12.2006**
(21) Anmeldenummer: 01118213.6
(22) Anmeldetag: 28.07.2001
(51) Int. Cl.: B60R 21/13

(54) **Überrollschutzsystem für Kraftfahrzeuge**
Roll over protection device for vehicles
Dispositif de protection contre le retournement pour véhicules

(30) Priorität: 12.09.2000 DE 10044930
(43) Veröffentlichungstag der Anmeldung: 13.03.2002
(73) Patentinhaber: ISE Innomotive Systems Europe GmbH, 51702 Bergneustadt (DE)
(72) Erfinder: Beki, Gürkan, 51702 Bergneustadt (DE)
(74) Vertreter: Fuchs Mehler Weiss & Fritzsche

(56) Entgegenhaltungen:
- EP-A- 1 095 823
- WO-A-97/48579
- DE-A1- 4 342 400
- DE-A1- 19 712 955
- US-A- 5 236 219

## Beschreibung

Die Erfindung bezieht sich auf ein Überrollschutzsystem, mit
- einem geführten Überrollkörper, der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine obere, schützende Stellung bringbar ist, und
- einer Verriegelungseinrichtung für das Verriegeln des Überrollkörpers in der oberen Stellung, bestehend aus zwei Verriegelungskomponenten, von denen eine fahrzeugfest angebracht und die andere mit dem Überrollkörper verbunden ist, und die Rastelemente besitzen, die in der ausgefahrenen Stellung des Überrollkörpers im verriegelnden Wirkeingriff stehen, wobei an zwei, quer zur Verfahrrichtung des Überrollkörpers beabstandeten, Stellen des Überrollkörpers leistenartige Rastelemente vorgesehen sind, die sich in Verfahrrichtung des Überrollkörpers erstrecken, und eine Komponente der Verriegelungseinrichtung bilden.

Derartige Überrollschutzsysteme dienen zum Schutz der Insassen in Kraftfahrzeugen ohne schützendes Dach, typischerweise in Cabriolets oder Sportwagen. Ein Überrollschutzsystem nach dem Oberbegriff des Anspruchs 1 ist aus US 5,236,219 bekannt.

Es ist dabei bekannt, einen die gesamte Fahrzeugbreite überspannenden, fest installierten Überrollbügel vorzusehen oder jedem Fahrzeugsitz einen höhenunveränderlich fest installierten Überrollbügel zuzuordnen.

Bei beiden Lösungen wird der erhöhte Luftwiderstand und das Auftreten von Fahrgeräuschen als nachteilig empfunden, abgesehen von der Beeinträchtigung des Fahrzeugaussehens.

Am Markt setzen sich daher immer mehr konstruktive Lösungen durch, bei denen der Überrollbügel im Normalzustand eingefahren ist, und im Gefahrenfall, also bei einem drohenden Überschlag, schnell in eine schützende Position ausgefahren wird, um zu verhindern, daß die Fahrzeuginsassen durch das sich überschlagende Fahrzeug erdrückt werden.

Diese Lösungen weisen typischerweise einen in einem Kassetten-Gehäuse geführten U-förmigen oder aus einem Profilkörper gebildeten Überrollbügel, auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung, durch die Federkraft in eine obere, schützende Stellung bringbar ist, wobei eine dann in Wirkeingriff tretende Verriegelungseinrichtung ein Eindrücken in die Kassette verhindert.

Die Haltevorrichtung besitzt dabei typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den sogenannten Crashmagneten, oder durch ein pyrotechnisches Auslöseglied gebildet ist.

Die Verriegelungseinrichtung besteht typischerweise aus einer schwenkbar angelenkten, federvorgespannten Rastklinke mit Zahnsegmenten und einer feststehenden Zahnleiste oder dergleichen, wobei ein Element mit dem Überrollbügel und das andere fahrzeugfest verbunden ist.

Eine derartige Kassetten-Konstruktion eines Überrollbügelschutzsystems zeigt beispielsweise die DE 43 42 400 A 1. Auch die DE 197 81 833 T 1 zeigt diese Kassetten-Konstruktion.

Dieses bekannte Überrollschutzsystem weist ein Gehäuse in Form einer einseitig offenen, U-förmigen Kassette auf, mit zwei Seitenwänden, die auf der offenen Seite der Kassette jeweils einen nach außen abgekanteten Winkelbabschnitt zur fahrzeugfesten Befestigung der Kassette besitzen, an denen weiterhin ein Bodenblech befestigt ist, und die schließlich frontseitig über eine Deckwand miteinander verbunden sind. Dabei ist jedem Fahrzeugsitz eine derartige Kassette zugeordnet. Das Überrollschutzsystem besitzt weiterhin einen U-förmigen Überrollbügel bestehend aus einem gekrümmten Abschnitt und zwei parallelen Schenkelrohren, die jeweils eine geschlossene Mantelfläche besitzen, und deren offene Enden über ein traversenartiges, versteifendes Verbindungselement miteinander verbunden sind.

Das System weist ferner zwei mit einem Ende am Gehäuseboden angebrachte, in Innern jeweils eine Druckfeder für den alleinigen Antrieb des Überrollbügels aufnehmende, Standrohre, die jeweils von einem Schenkelrohr koaxial umgriffen sind und ebenfalls eine geschlossene Mantelfläche aufweisen sowie einen am oberen Ende des Gehäuses flächig an den Seitenwänden der Kassette angebrachten Führungsblock auf, der Führungsöffnungen zur zusätzlichen äußeren Führung der Schenkelrohre besitzt.

Neben einer guten Führung des Überrollkörpers, die die bei einem Überschlag auftretenden Kräfte aufzunehmen in der Lage ist, kommt es in Bezug auf die Sicherheit des Überrollbügelsystems auch auf die konstruktive Gestaltung der Verriegelungseinrichtung an. Da beim Stand der Technik betreffend die Kassettensysteme die Verriegelungseinrichtung kräftemäßig von der Führung getrennt ist, ist einmal der Kraftfluß bei der Aufnahme der Überschlagskräfte nicht optimal, was noch dadurch verschärft wird, weil eine Komponente der Verriegelungseinrichtung, die federvorgespannte Rastklinke mit Zahnsegmenten, schwenkbar angelenkt ist, was einen ungleichmäßigen Eingriff mit der anderen Komponente der Zahnleiste bewirkt. Zum anderen sind durch die getrennte Anbringung der Verriegelungseinrichtung entsprechend große Baumaße notwendig.

Der Erfindung liegt die Aufgabe zugrunde, das eingangs bezeichnete Überrollschutzsystem hinsichtlich der Verriegelungseinrichtung so auszubilden, daß die bei einem Überschlag auf den Überrollkörper auftretenden Kräfte ohne Störung des Kraftflusses in die Befestigung des Systems im Fahrzeug abgeleitet werden und dabei gleichmäßig die Verriegelungseinrichtung belasten, bei geringen Baumaßen dieser Einrichtung.

Die Lösung dieser Aufgabe gelingt ausgehend von
- einem geführten Überrollkörper, der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine obere, schützende Stellung bringbar ist, und
- einer Verriegelungseinrichtung für das Verriegeln des Überrollkörpers in der oberen Stellung, bestehend aus zwei Verriegelungskomponenten, von denen eine fahrzeugfest angebracht und die andere mit dem Überrollkörper verbunden ist, und die Rastelemente besitzen, die in der ausgefahrenen Stellung des Überrollkörpers im verriegelnden Wirkeingriff stehen, wobei an zwei, quer zur Verfahrrichtung des Überrollkörpers beabstandeten, Stellen des Überrollkörpers leistenartige Rastelemente vorgesehen sind, die sich in Verfahrrichtung des Überrollkörpers erstrecken, und eine Komponente der Verriegelungseinrichtung bilden, gemäß der Erfindung dadurch, daß an jeder beabstandeten Stelle des Überrollkörpers jeweils mindestens ein Paar gegenüberliegender, leistenartiger Rastelemente vorgesehen ist, und daß die zweite Komponente der Verriegelungseinrichtung an jeder besagten Stelle des Überrollbügels durch mindestens ein Paar von Sperrsteinen gebildet ist, die gegenüberliegend in einem Gehäuse in Front zu den zugeordneten leistenartigen Rastelementen gegen die Kraft einer Feder radial verschiebbar gehaltert sind und mindestens eine Rastnase für den verriegelnden Wirkeingriff mit dem zugeordneten leistenartigen Rastelement besitzen.

Dadurch, daß die beiden Verriegelungseinrichtungen unmittelbar in den Führungsbereichen vorgesehen sind, erfolgt die Kraftübertragung ohne Störung des Kraftflusses vom Überrollkörper über die Verriegelung direkt in die fahrzeugfesten Führungskomponenten.

Durch die jedem Paar der leistenartigen Rastelementen zugeordneten Sperrsteine ist ein gleichzeitiger, symmetrischer, weil beiderseitiger Eingriff der Sperrsteine in die Rastelemente gewährleistet, wogegen bei der herkömmlichen Klinkenverrastung ein ungleichmäßiger Eingriff durch die Drehbewegung der Rastklinke gegeben ist.

Außerdem sind durch die Integration der Verriegelung in die Führung geringere Baumaße für das Überrollschutzsystem erzielbar.

Durch die DE 41 00 506 C1 ist ferner eine Überrollanordnung mit einem U-förmigen Überrollbügel mit Seitenschenkeln, die in fahrzeugfesten Aufnahmerohren geführt sind, bekannt geworden. An jedem Seitenschenkel ist eine Rasterstange angebracht, die zwecks Verriegelung einer ausgefahrenen Stellung des Überrollbügels jeweils mit einer Klinke in Wirkeingriff bringbar ist.

Im bekannten Fall ist daher jedem Seitenschenkel jeweils nur eine Rasterstange zugeordnet, wogegen im Fall der Erfindung an jedem Seitenschenkel ein Paar gegenüberliegender Rastelemente vorgesehen ist, denen jeweils entsprechend ein Paar von linear (radial) verschiebbaren "Sperrsteinen" zugeordnet ist.

Diese "Sperrsteine" sind keine "Klinken" wie im bekannten Fall, die durch drehbeweglich angelenkte Verriegelungshebel gebildet werden. Außerdem befindet sich die Verriegelung nicht unmittelbar im Führungsbereich, sondern etwas seitlich versetzt dazu, d.h. die Verriegelung ist kräftemäßig von der Führung getrennt.

Es treten dadurch die bereits eingangs genannten Nachteile auf:
- Störung des Kraftflusses, bei der Ableitung der Kräfte in das Fahrzeug durch die Verriegelung
- kein symmetrischer, gleichmäßiger Wirkeingriff der Verriegelungskomponenten, sondern, bedingt durch die Drehbewegung der Klinke, ein ungleichmäßiger, und auch einseitiger Wirkeingriff.

Gemäß einer Ausgestaltung der Erfindung hat jeder Sperrstein zwei Rastnasen. Dadurch ist unter Abwägung des Bauraumes eine günstige Kräfteverteilung beim Auftreten einer Last gegeben.

Grundsätzlich kann auch nur eine Rastnase bzw. können auch mehr als zwei Rastnasen ausgebildet sein.

Um eine wirksame Verriegelung unter Last zu gewährleisten, sind die Sperrsteine zweckmäßig so ausgebildet, daß die Rastnasen an der unteren Kontaktfläche eine Schräge, vorzugsweise im Bereich von 3° - 5°, aufweisen.

Dadurch werden die Rastnasen der Sperrsteine unter Last in die leistenartigen Rastelemente der anderen Verriegelungskomponente hineingedrückt.

Eine konstruktiv einfache und dennoch wirksame Vorspannung der Sperrsteine im umgebenden Gehäuse läßt sich erzielen, wenn die die Sperrsteine radial vorspannenden Federn durch Blattfedern gebildet sind.

Eine vom Aufwand und der Kräfteaufnahme her günstige konstruktive Gestaltung läßt sich prinzipiell gemäß einer Weiterbildung der Erfindung erzielen, wenn die leistenartigen Rastelemente an einem fahrzeugfesten Führungsteil des Überrollkörpers vorgesehen sind und die Gehäuse mit den Sperrsteinen am Überrollkörper angebracht sind.

Grundsätzlich kann die Anordnung allerdings auch kinematisch umgekehrt werden, d.h. daß die leistenartigen Rastelemente auf dem bewegten Überrollbügel verbunden und die Gehäuse mit den Sperrsteinen fahrzeugfest angebracht sind.

Ausgehend von der vorgenannten prinzipiellen Weiterbildung und einem Überrollschutzsystem mit einem rohrförmigen Überrollbügel, bestehend aus zwei Schenkelrohren und einem diesen verbindenden Basisschenkel, ergibt sich konkret eine günstige Konstruktion, wenn das Führungsteil für jedes Schenkelrohr eine Rastsäule ist, die am Fahrzeugboden befestigt ist, im oberen Bereich an zwei gegenüberliegenden Stellen jeweils leistenartige Rastelemente aufweist und kopfseitig einen Führungskörper für das zugehörige, die Rastsäule umfassende Schenkelrohr besitzt, der zugleich die Abstützung für das untere Ende der Antriebs-Druckfeder bildet, deren oberes Ende sich an einem Gegenlager im Schenkelrohr abstützt, und daß das Gehäuse mit den Sperrsteinen jeweils am offenen Ende des zugehörigen Schenkelrohres angebracht ist.

Eine konstruktiv günstige Gestaltung der Funktion der Begrenzung der Ausfahrbewegung des Überrollkörpers läßt sich erzielen, wenn in dem Gehäuse ein Anschlag ausgebildet ist, der einen Gegenanschlag für den Führungskörper bildet. Auch hierbei sind andere Konstruktionen denkbar.

Um eine Reversierung des ausgefahrenen und verriegelten Überrollkörpers zu ermöglichen, ist das Überrollschutzsystem vorteilhaft so ausgebildet, daß die Sperrsteine aus dem Gehäuse herausragende Nasen besitzen, über die die Sperrsteine manuell außer Wirkeingriff mit den zahnleistenartigen Rastelementen bringbar sind.

Das Überrollschutzsystem, bei dem die erfindungsgemäße Verriegelungseinrichtung Anwendung findet, kann grundsätzlich eine Kassettenkonstruktion sein, die jewels einem Fahrzeugsitz zugeordnet ist, d.h. jeder Fahrzeugsitz seinen eigenen Überrollbügel hat.

Die erfindungsgemäße Konstruktion wirkt sich jedoch im besonderen Maße vorteilhaft aus, wenn der rohrförmige Überrollbügel so ausgebildet ist, daß er zwei nebeneinander liegende Fahrzeugsitze überspannt und die Rastsäulen entsprechend beabstandet am Fahrzeugboden angebracht sind.

Dabei ist es vorteilhaft, wenn eine die Bügelbreite überspannende, fahrzeugfest angebrachte, Traverse vorgesehen ist, die jeweils einen Führungsblock für die geführte Aufnahme des zugehörigen Schenkelrohres aufweist, und wenn an der Traverse ein sensorgesteuertes Auslösesystem und an einem mittig abgesenkten Abschnitt des Überrollbügels ein Halteglied angebracht ist, das in lösbaren Wirkeingriff mit dem Auslösesystem bringbar ist.

Dadurch ist eine günstige Führung des Überrollbügels und eine günstige Anbringung der Haltevorrichtung möglich.

Anhand eines in den Zeichnungen dargestellten Ausführungsbeispieles wird die Erfindung näher beschrieben.

Es zeigen:
- Fig. 1: in einer zum Teil geschnittenen Frontansicht ein Überrollschutzsystem mit einem rohrförmigen Überrollkörper, der zwei nebeneinander liegende Fahrzeugsitze überspannt, bei dem die erfindungsgemäße Verriegelungseinrichtung, hier bestehend aus fahrzeugfesten Rastsäulen und mit dem Überrollkörper bewegten, in einem Gehäuse radial beweglich aufgenommenen Sperrsteinen, bevorzugt Anwendung findet,
- Fig. 2: einem Ausschnitt aus Fig. 1 in Form eines schematischen Längsschnittes eine nähere Darstellung der Rastsäulen und der Sperrsteine sowie deren Zusammenwirken,
- Fig. 3: einen Ausschnitt entsprechend Fig. 2, jedoch in einer z. T. weggebrochenen isometrischen Darstellung,
- Fig. 4: einen vergrößerten Ausschnitt aus Fig. 4 unter näherer Darstellung des Wirkeingriffes der Sperrsteine mit den Rastnasen der Rastsäulen,
- Fig. 5: eine isometrische Darstellung des die Sperrsteine aufnehmenden Gehäuses, und
- Fig. 6: in einer schematischen Darstellung einen Schieber zur manuellen Entriegelung der Sperrsteine.

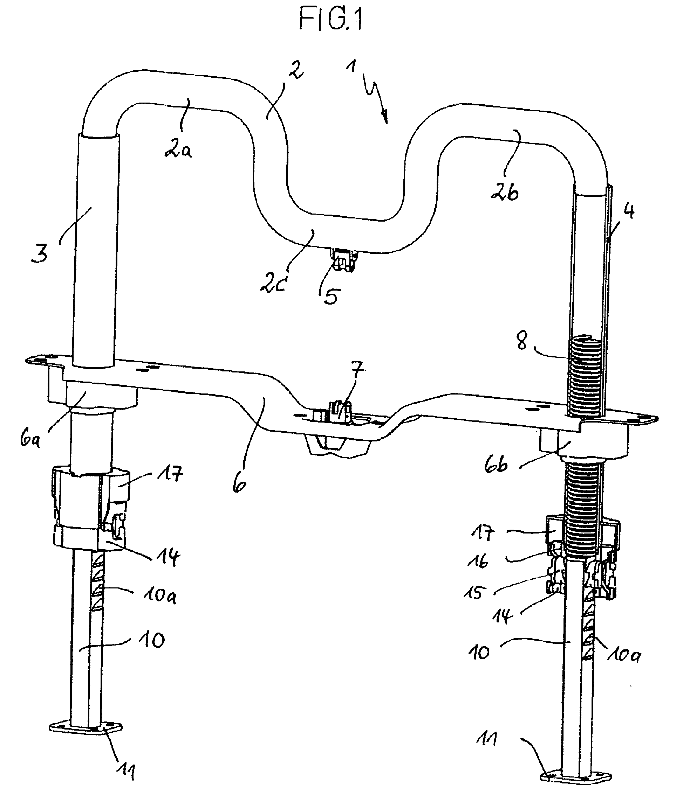

Die Fig. 1 zeigt in einer z. T. geschnittenen Frontansicht ein Überrollschutzsystem mit einem rohrförmigen Überrollkörper 1, der zwei nebeneinander liegende Fahrzeugsitze überspannt, d.h. ein Überrollschutzsystem, das einem Paar von Fahrzeugsitzen zugeordnet ist, bei dem die Erfindung bevorzugt angewendet wird. Die Erfindung kann jedoch auch bei den eingangs beschriebenen Kassettensystemen Anwendung finden, die jeweils einem Fahrzeugsitz einzeln zugeordnet sind.

Der rohrförmige Überrollkörper besteht aus einem mäanderförmig gebogenem Basisrohr 2, das an beiden Enden jeweils mit einem Schenkelrohr 3, 4 verbunden ist, insbesondere durch Verschweißen. Das Basisrohr 2 besitzt zwei hochstehende Abschnitte 2 a, 2 b, über die das Fahrzeug im Falle eines Überschlages abrollen würde, und die jeweils auf Höhe des Fahrzeugsitzes angebracht sind, sowie einen mittleren, abgesenkten Abschnitt 2 c, an dem ein Halteglied 5 angebracht ist, das später noch erläutert werden wird.

Das Überrollschutzsystem besitzt ferner eine Traverse 6, die über Führungsblöcke 6 a, 6 b, in denen die Schenkelrohre 3, 4 geführt sind, fahrzeugfest verbunden ist. An der Traverse 6 ist ferner ein übliches sensorgesteuertes Auslösesystem 7 fest angebracht, insbesondere ein Auslösemagnet mit einer Doppelhebel-Sperrklinke für den lösbaren Wirkeingriff mit dem Halteglied 5 am Überrollkörper 1, wie es in der DE 197 50 693 A1 beschrieben wird. Das Auslösesystem 7 in Verbindung mit dem Halteglied 5 bilden die eingangs erläuterte Haltevorrichtung für das Halten des Überrollkörpers 1 im eingefahrenen Zustand, wobei in Fig. 1 der ausgelöste Zustand dargestellt ist, bei dem sich der Überrollkörper 1 in der oberen, schützenden Stellung befindet.

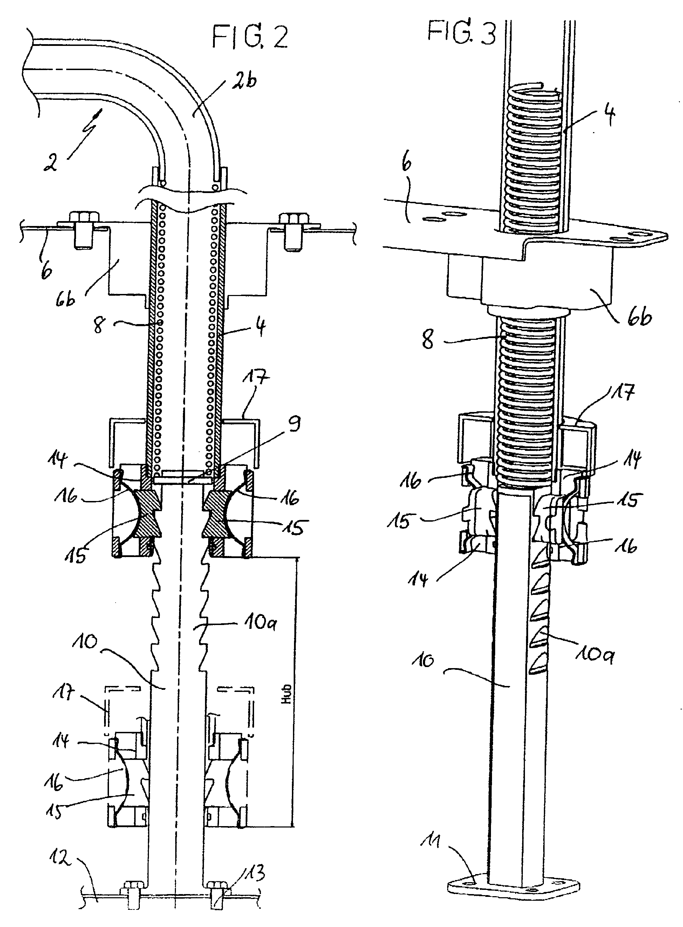

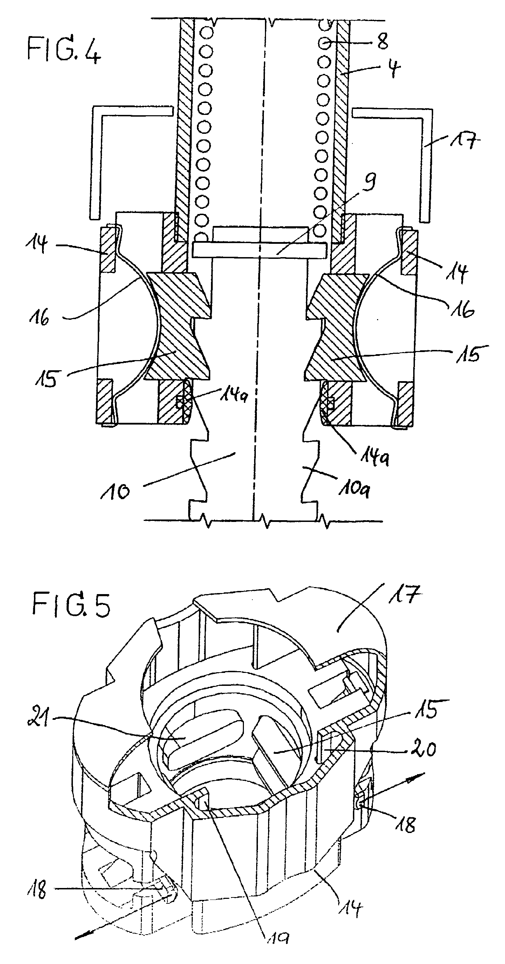

Im Innern jedes der beiden Schenkelrohre 3, 4 ist eine Antriebs-Druckfeder 8 aufgenommen, die sich jeweils unten an einem Anschlag 9 einer Rastsäule 10, abstützt, die ihrerseits über ein Fußteil 11 mit dem Fahrzeugboden 12 (Fig. 2) fest verbunden ist, z.B., wie dargestellt, über Schraubverbindungen 13. Das obere Ende der Antriebs-Druckfeder 8 stützt sich in bekannter Weise an der Verbindungsstelle des Basisrohres 2 mit den Schenkelrohren 3, 4 ab. Der Anschlag 9 dient zugleich der unteren Führung der Bügel-Schenkelrohre 3, 4 und ist entsprechend dieser Funktion ausgestaltet, d.h. besitzt eine Dicke, die eine ausreichende Führungsfläche gewährleistet, in Verbindung mit der Gleitlagerbuchse 14 a in Fig. 4.

Die Rastsäulen 10 dienen einmal als untere Führung der Schenkelrohre 3, 4 zusätzlich zu der oberen Führung durch die Führungsblöcke 6 a, 6 b und bilden zum anderen durch an ihnen gegenüberliegend angeformte, zahnleistenartige Rastnasen 10 a das fahrzeugfeste Verriegelungselement der eingangs beschriebenen Verriegelungseinrichtung, d.h. der Wiedereinfahrsperre für den ausgefahrenen Überrollkörper 1. Die Rastnasen 10 a können einstückig an der Rastsäule 10 angeformt sein. Sie können aber auch durch separate, an dem Basiskörper der Rastsäule angebrachte Leisten realisiert werden.

Das zusammen mit dem Überrollbügel 1 bewegliche Verriegelungselement der Wiedereinfahrsperre, das beim Stand der Technik typischerweise durch eine Sperrklinke gebildet ist, besteht im Fall der Erfindung im wesentlichen aus einem Gehäuse 14 mit zwei gegenüberliegenden Sperrsteinen 15 und zwei Federn, vorzugsweise Blattfedern 16.

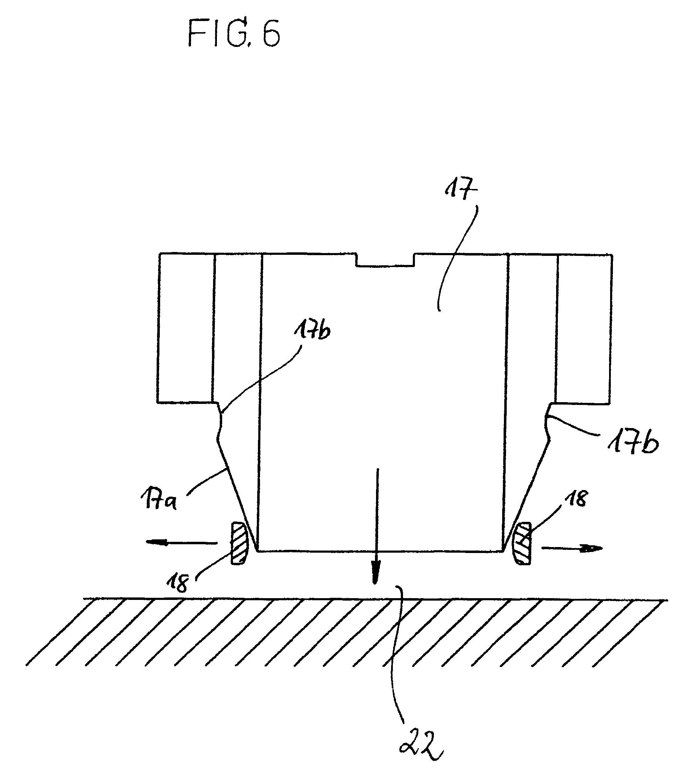

Das Gehäuse 14, dessen näherer Aufbau die Fig. 5 zeigt, ist, wie insbesondere aus der Fig. 4 zu erkennen ist, fest am Ende des zugehörigen Schenkelrohres 3, 4 angebracht.

Die Sperrsteine 15 sind im Gehäuse 14 horizontal gleitend gelagert und werden durch die Blattfedern 16 gegen die Gehäusemitte gedrückt. Die Sperrsteine 15 weisen an der unteren Kontaktfläche eine Schräge von 3° - 5° aus. Diese bewirkt im Lastfall, d.h. wenn eine Kraft auf den Überrollbügel wirkt, daß die Sperrsteine 15 nicht aus dem Gehäuse 14 gleiten, sondern sich in die Rastnasen 10 a der Rastsäule 10 eindrücken, und so in gewünschter Weise die Wiedereinfahrsperre bilden.

Die Sperrsteine 15 sind nämlich im ausgefahrenen Zustand des Überrollkörpers, der in Fig. 2 dargestellt ist, immer im Eingriff mit den Rastnasen 10, außer bei der gewollten Reversierung des Überrollbügels 1 in den Ruhezustand, wobei in der Fig. 2 die Lage des Gehäuses 14 mit den Sperrsteinen 15 im Ruhezustand zusätzlich gezeigt ist. Beim Ausfahren des Überrollbügels "ratschen" sie über die Rastnasen 10 a der Rastsäule 10 hinweg, eine Wiedereinfahrbewegung ist jedoch durch den Eingriff der Sperrsteine 15 in die Rastnasen 10 a der Rastsäule 10 gesperrt.

Damit die bei einem Überschlag auftretenden Kräfte sicher von der Verriegelungseinrichtung aufgenommen werden, sind sowohl die Rastäule 10 und die Rastnasen 10 a als auch das Gehäuse 14 mit den Sperrsteinen 15 als Metallteile ausgebildet und bestehen vorzugsweise aus Stahl.

Da bei der Herstellung der Überrollschutzsysteme und später bei betrieblichen Inspektionen der Überrollbügel 2 gewollt ausgefahren wird, muß die Möglichkeit bestehen, die Verriegelung manuell aufzuheben, d.h. die Sperrsteine 15 außer Wirkeingriff mit den Rastnasen 10 a zu bringen, damit der Überrollbügel 2 manuell in die Ausgangslage eingedrückt, d.h. reversiert, werden kann.

Die Sperrsteine 15 haben zu diesem Zweck seitliche Arme oder Nasen 18, die aus dem Gehäuse 14 herausragen. Es ist ferner ein Entriegelungselement 17 in Form eines Kunststoff-Schiebers vorgesehen, das in Fig. 6 näher dargestellt ist. Es besitzt seitlich angebrachte, sich nach unten verjüngende Schrägen 17 a, die an ihrer oberen, breiten Basis jeweils einen kleinen Hinterschnitt 17 b besitzen, die verhindern, daß die Sperrsteine 15 ungewollt verriegeln. Der Kunststoffschieber 17 wird dabei, wie in Fig. 5 dargestellt, in Führungen 19, 20 verschiebbar gehaltert.

Zur Entriegelung der Sperrsteine 18, d.h. zum Reversieren des Überrollbügels, wird der Schieber 17 manuell nach unten gedrückt, bis die Arme 18 jeweils in den Hinterschnitt 17 b einrasten. Durch die Schrägen 17 a werden dabei die Nasen oder Arme 18 nach außen in Pfeilrichtung geschoben. Dadurch kommen die Sperrsteine 15 außer Eingriff mit den Rastnasen 10 a und die Verrieglung ist für die Durchführung der Reversierung aufgehoben.

Jetzt kann der Überrollbügel 2 manuell mit beiden Händen (die Entriegelung ist durch den Hinterschnitt in Selbsthaltung) eingeschoben worden. Erreicht er zusammen mit dem Schieber 17 die untere Position, vorgegeben durch den in Fig. 6 symbolisch dargestellten Anschlag 22, wird durch die Einschiebbewegung der Schieber 17 als Reaktion nach oben geschoben. Die Arme 18 springen dabei aus den Hinterschnitten 17 b und die Sperrsteine verriegeln wieder den Überrollbügel.

Ein Anschlag 21 im Gehäuse begrenzt die Aufstellbewegung des Überrollbügels, sobald der Anschlag an der Unterseite des Führungskörpers 9 der Rastsäule 10 anschlägt (Fig. 2).

## Patentansprüche

1. Überrollschutzsystem für Kraftfährzeuge, mit
- einem geführten Überrollkörper (1), der im Normalzustand gegen die Kraft von mindestens einer vorgespannten Antriebs-Druckfeder (8) durch eine Haltevorrichtung (5, 7) in einer unteren, eingefahrenen Ruhelage haltbar ist, und unter Lösen der Haltevorrichtung durch die Federkraft der Antriebs-Druckfeder (8) in eine obere, schützende Stellung bringbar ist, und
- einer Verriegelungseinrichtung für das Verriegeln des Überrollkörpers (1) in der oberen Stellung, bestehend aus zwei Verriegelungskomponenten, von denen eine fahrzeugfest angebracht und die andere mit dem Überrollkörper (1) verbunden ist, und die Rastelemente besitzen, die in der ausgefahrenen Stellung des Überrollkörpers (1) im verriegelnden Wirkeingriff stehen, wobei an zwei, quer zur Verfahrrichtung des Überrollkörpers (1) beabstandeten, Stellen des Überrollkörpers (1) leistenartige Rastelemente (10 a) vorgesehen sind, die sich in Verfahrrichtung des Überrollkörpers (1) erstrecken, und eine Komponente der Verriegelungseinrichtung bilden,
**dadurch gekennzeichnet, daß** an jeder beabstandeten Stelle des Überrollkörpers (1) jeweils mindestens ein Paar gegenüberliegender, leistenartiger Rastelemente (10a) vorgesehen ist, und daß die zweite Komponente der Verriegelungseinrichtung an jeder besagten Stelle des Überrollbügels durch mindestens ein Paar von Sperrsteinen (15) gebildet ist, die gegenüberliegend in einem Gehäuse (14) in Front zu den zugeordneten leistenartigen Rastelementen (10 a) gegen die Kraft einer Feder (16) radial verschiebbar gehaltert sind und mindestens eine Rastnase für den verriegelnden Wirkeingriff mit dem zugeordneten leistenartigen Rastelement (10 a) besitzen.

2. Überrollschutzsystem nach Anspruch 1, **dadurch gekennzeichnet, daß** jeder Sperrstein (15) zwei Rastnasen hat.

3. Überrollschutzsystem nach Anspruch 1 oder 2, **dadurch gekennzeichnet, daß** die Rastnasen an der unteren Kontaktfläche eine Schräge, vorzugsweise im Bereich von 3° - 5°, aufweisen.

4. Überrollschutzsystem nach einem der Ansprüche 1 bis 3, **dadurch gekennzeichnet, daß** die die Sperrsteine (15) radial vorspannenden Federn (16) durch Blattfedern gebildet sind.

5. Überrollschutzsystem nach einem der Ansprüche 1 bis 4, **dadurch gekennzeichnet, daß** die leistenartigen Rastelemente (10 a) an einem fahrzeugfesten Führungsteil (10) des Überrollkörpers (1) vorgesehen sind und die Gehäuse (14) mit den Sperrsteinen (15) am Überrollkörper (1) angebracht sind.

6. Überrollschutzsystem nach Anspruch 5, mit einem rohrförmigen Überrollbügel (2), bestehend aus zwei parallelen Schenkelrohren (3, 4) und einem diese verbindenden Basisschenkel (2 a - 2 c), **dadurch gekennzeichnet, daß** das Führungsteil für jedes Schenkelrohr (3, 4) eine Rastsäule (10) ist, die am Fahrzeugboden (12) befestigt ist, im oberen Bereich an zwei gegenüberliegenden Stellen jeweils leistenartige Rastelemente (10 a) aufweist und kopfseitig einen Führungskörper (9) für das zugehörige, die Rastsäule umfassende Schenkelrohr (3, 4) besitzt, der zugleich die Abstützung für das untere Ende der Antriebs-Druckfeder (8) bildet, deren oberes Ende sich an einem Gegenlager im Schenkelrohr (3, 4) abstützt, und daß das Gehäuse (14) mit den Sperrsteinen (15) jeweils am offenen Ende des zugehörigen Schenkelrohres (3, 4) angebracht ist.

7. Überrollschutzsystem nach Anspruch 6, **dadurch gekennzeichnet, daß** in dem Gehäuse (14) ein Anschlag (21) ausgebildet ist, der einen Gegenanschlag für den Führungskörper (9) bildet.

8. Überrollschutzsystem nach einem der Ansprüche 1 bis 7, **dadurch gekennzeichnet, daß** die Sperrsteine (15) aus dem Gehäuse (14) herausragende Nasen (18) besitzen, über die die Sperrsteine (15) mittels eines entriegelnden Schiebers (17) manuell außer Wirkeingriff mit den zahnleistenartigen Rastelementen (10 a) bringbar sind.

9. Überrollschutzsystem nach Anspruch 8, **dadurch gekennzeichnet, daß** der Schieber (17) im Bereich der Sperrsteine (15) Schrägen (17 a) und an der oberen, breiten Basis Hinterschnitte (17 b) für ein Einrasten der Nasen (18) besitzt.

10. Überrollschutzsystem nach einem der Ansprüche 6 bis 9, **dadurch gekennzeichnet, daß** der rohrförmige Überrollbügel (2) so ausgebildet ist, daß er zwei nebeneinander liegende Fahrzeugsitze überspannt und die Rastsäulen (10) entsprechend beabstandet am Fahrzeugboden (12) angebracht sind.

11. Überrollschutzsystem nach Anspruch 10, **dadurch gekennzeichnet, daß** eine die Bügelbreite überspannende, fahrzeugfest angebrachte, Traverse (6) vorgesehen ist, die jeweils einen Führungsblock (6 a, 6 b) für die geführte Aufnahme des zugehörigen Schenkelrohres (3, 4) aufweist.

12. Überrollschutzsystem nach Anspruch 11, **dadurch gekennzeichnet, daß** an der Traverse (6) ein sensorgesteuertes Auslösesystem (7) und an einem mittig abgesenkten Abschnitt (2 c) des Überrollbügels (2) ein Halteglied (5) angebracht ist, das in lösbaren Wirkeingriff mit dem Auslösesystem (7) bringbar ist.

## Claims

1. Roll-over protection system for motor vehicles, having
- a guided roll member (1) which, in the normal state, can be held in a lower retracted rest position by means of a holding device (5, 7) counter to the force of at least one biased drive compression spring (8), and which, by the holding device being released, can be brought by the resilient force of the drive compression spring (8) into a protective upper position, and
- a locking device for locking the roll member (1) in the upper position, comprising two locking components, one of which is fitted so as to be secured to a vehicle and the other is connected to the roll member (1), and which have catch elements which, when the roll member (1) is in the extended position, are in locking operational engagement, strip-like catch elements (10a) being provided at two locations of the roll member (1) that are spaced apart transversely relative to the travel direction of the roll member (1) and extending in the travel direction of the roll member (1) and forming a component of the locking device, **characterised in that** there are provided, at each spaced-apart location of the roll member (1), at least one pair of opposing, strip-like catch elements (10a), and **in that** the second component of the locking device is formed at each location of the roll bar by at least one pair of locking sliding-block-like members (15), which are retained so as to be able to be radially displaced counter to the force of a spring (16) opposite each other in a housing (14) in front relative to the associated strip-like catch elements (10a), and which have at least one locking projection for the locking operational engagement with the associated strip-like catch element (10a).

2. Roll-over protection system according to claim 1, **characterised in that** each locking sliding-block-like member (15) has two locking projections.

3. Roll-over protection system according to claim 1 or 2, **characterised in that** the locking projections at the lower contact face have an inclination, preferably in the region of from 3° to 5°.

4. Roll-over protection system according to any one of claims 1 to 3, **characterised in that** the springs (16) which radially pretension the locking sliding-block-like members (15) are formed by leaf springs.

5. Roll-over protection system according to any one of claims 1 to 4, **characterised in that** the strip-like catch elements (10a) are provided on a guiding member (10) of the roll member (1) that is secured to the vehicle and the housings (14) are fitted to the roll member (1) with the locking sliding-block-like members (15).

6. Roll-over protection system according to claim 5, having a tubular roll bar (2), comprising two parallel tubular members (3, 4) and a base member (2a - 2c) which connects the tubular members, **characterised in that** the guiding member for each tubular member (3, 4) is a catch pillar (10) which is fixed to the vehicle base (12) and which has in each case, in the upper region, at two opposing locations, strip-like catch elements (10a) and, at the top side, a guiding member (9) for the associated tubular member (3, 4) that surrounds the catch pillar, which guiding member at the same time forms the support for the lower end of the drive compression spring (8) whose upper end is supported on a counter-support in the tubular member (3, 4), and **in that** the housing (14) is fitted in each case to the open end of the associated tubular member (3, 4) by means of the locking sliding-block-like members (15).

7. Roll-over protection system according to claim 6, **characterised in that** a stop (21) is formed in the housing (14) and forms a counter-stop for the guiding member (9).

8. Roll-over protection system according to any one of claims 1 to 7, **characterised in that** the locking sliding-block-like members (15) have projections (18) which protrude from the housing (14) and by means of which the locking sliding-block-like members (15) can be brought manually out of operational engagement with the toothed strip-like catch elements (10a) by means of an unlocking slide (17).

9. Roll-over protection system according to claim 8, **characterised in that** the slide (17) has, in the region of the locking sliding-block-like members (15), inclinations (17a) and, at the upper, wide base, undercut portions (17b) for engagement of the projections (18).

10. Roll-over protection system according to any one of claims 6 to 9, **characterised in that** the tubular roll bar (2) is constructed in such a manner that it spans two adjacent vehicle seats and the catch pillars (10) are fitted to the vehicle base (12) with corresponding spacing.

11. Roll-over protection system according to claim 10, **characterised in that** there is provided a cross-member (6) which extends over the width of the bar and is fitted so as to be secured to the vehicle and which in each case has a guiding block (6a, 6b) in order to receive the associated tubular member (3, 4) in a guided manner.

12. Roll-over protection system according to claim 11, **characterised in that** a sensor-controlled release system (7) is fitted to the cross-member (6) and a retaining member (5) is fitted to a centrally lowered portion (2c) of the roll bar (2) and can be brought into releasable operational engagement with the release system (7).

## Revendications

1. Dispositif de protection pour véhicules, en cas de tonneau, avec
- un corps de capotage (1) guidé qui, à l'état normal, peut être maintenu dans une position de repos inférieure rentrée par un dispositif de maintien (5, 7) en opposition à la force d'au moins un ressort de pression d'entraînement (8) précontraint, et peut être amené dans une position supérieure protectrice en libérant le dispositif de maintien par la force du ressort de pression d'entraînement (8), et
- un dispositif de verrouillage pour verrouiller le corps de capotage (1) dans la position supérieure, constitué de deux composants de verrouillage parmi lesquels l'un est solidaire du véhicule et l'autre est rattaché au corps de capotage (1), et qui possèdent des éléments d'encliquetage qui, dans la position sortie du corps de capotage (1), sont en prise active bloquante, des éléments d'encliquetage (10a) de type nervure étant prévus à deux emplacements du corps de capotage (1) espacés transversalement au sens de déplacement du corps de capotage (1), éléments qui s'étendent dans le sens de déplacement du corps de capotage (1) et qui forment une composante du dispositif de verrouillage,
**caractérisé en ce qu'**au moins une paire d'éléments d'encliquetage de type nervure (10a) opposés est prévue sur chaque emplacement espacé du corps de capotage (1), et **en ce que** la deuxième composante du dispositif de verrouillage sur chaque dit emplacement de l'arceau de capotage est formée par au moins une paire de cales de blocage (15) qui sont serrées de façon radiale et coulissante dans une enveloppe (14) en face des éléments d'encliquetage de type nervure (10a) correspondants en opposition à la force d'un ressort (16) et qui possèdent au moins un nez d'encliquetage pour la prise active bloquante avec l'élément d'encliquetage de type nervure (10a) correspondant.

2. Dispositif de protection en cas de tonneau selon la revendication 1, **caractérisé en ce que** chaque cale de blocage (15) possède deux nez d'encliquetage.

3. Dispositif de protection en cas de tonneau selon la revendication 1 ou 2, **caractérisé en ce que** les nez d'encliquetage sur la surface de contact inférieure présentent un biais, de préférence dans une plage de 3 à 5 degrés.

4. Dispositif de protection en cas de tonneau selon l'une quelconque des revendications 1 à 3, **caractérisé en ce que** les ressorts (16) de précontrainte radiale des cales de blocage (15) sont formés par des ressorts à lames.

5. Dispositif de protection en cas de tonneau selon l'une quelconque des revendications 1 à 4, **caractérisé en ce que** les éléments d'encliquetage de type nervure (10a) sont prévus sur une pièce de guidage (10) du corps de capotage (1) solidaire du véhicule et l'enveloppe (14) avec les cales de blocage (15) sont disposées sur le corps de capotage (1).

6. Dispositif de protection en cas de tonneau selon la revendication 5, avec un arceau de capotage (2), comprenant deux branches tubulaires (3, 4) parallèles et une branche de base (2a - 2c) reliant celles-ci, **caractérisé en ce que** la pièce de guidage de chaque branche tubulaire (3, 4) est un montant d'encliquetage (10) qui est fixé au plancher du véhicule (12), présente à chaque fois des éléments d'encliquetage (10a) à deux emplacements opposés dans sa section supérieure et possède, côté tête, un corps de guidage (9) pour la branche tubulaire (3, 4) associée entourant le montant d'encliquetage, qui forme en même temps le support de l'extrémité inférieure du ressort de pression d'entraînement (8), dont l'extrémité supérieure prend appui sur une contre-butée dans la branche tubulaire (3, 4), et **en ce que** l'enveloppe (14) avec les cales de blocage (15) sont disposées à l'extrémité libre de la branche tubulaire (3, 4) associée.

7. Dispositif de protection en cas de tonneau selon la revendication 6, **caractérisé en ce que**, dans l'enveloppe (14), est prévue une butée (21) qui forme une contre-butée pour le corps de guidage (9).

8. Dispositif de protection en cas de tonneau selon l'une quelconque des revendications 1 à 7, **caractérisé en ce que** les cales de blocage (15) possèdent des nez (18) sortant de l'enveloppe (14) par l'intermédiaire desquels les cales de blocage (15) peuvent être mises hors de prise des éléments d'encliquetage de type nervure (10a) à l'aide d'un coulisseau (17) se débloquant.

9. Dispositif de protection en cas de tonneau selon la revendication 8, **caractérisé en ce que** le coulisseau (17) possède des biais (17a) dans la zone des cales de blocage (15) et des contre-dépouilles (17b) d'enclenchement des nez (18) sur la base large supérieure.

10. Dispositif de protection en cas de tonneau selon l'une quelconque des revendications 6 à 9, **caractérisé en ce que** l'arceau de capotage (2) tubulaire est conçu de telle sorte qu'il couvre deux sièges de véhicule situés l'un à côté de l'autre et les montants d'encliquetage (10) sont fixés au plancher du véhicule (12) à une distance l'un de l'autre en découlant.

11. Dispositif de protection en cas de tonneau selon la revendication 10, **caractérisé en ce qu'**il est prévu une traverse (6) dépassant la largeur de l'arceau et solidaire du véhicule, traverse qui présente un bloc de guidage (6a, 6b) pour le logement guidé de la branche tubulaire (3, 4) associée.

12. Dispositif de protection en cas de tonneau selon la revendication 11, **caractérisé en ce qu'**un système de déclenchement (7) commandé par capteur est disposé sur la traverse (6) et un élément de maintien (5) pouvant être mis en prise active amovible avec le système de déclenchement (7) est disposé sur une section (2c) abaissée au centre de l'arceau de capotage (2).
